(19) Europäisches Patentamt

European Patent Office

Office européen des brevets

(11) **EP 0 793 092 A1**

## (12) EUROPÄISCHE PATENTANMELDUNG

(43) Veröffentlichungstag:
**03.09.1997 Patentblatt 1997/36**

(51) Int. Cl.6: **G01N 21/89**

(21) Anmeldenummer: **97102841.0**

(22) Anmeldetag: **21.02.1997**

(84) Benannte Vertragsstaaten:
**DE FR GB LU**

(30) Priorität: **01.03.1996 DE 19607793**

(71) Anmelder: **BASF Magnetics GmbH**
**67059 Ludwigshafen (DE)**

(72) Erfinder:
- **Koller, Albrecht, Dr.**
  **81377 München (DE)**
- **Scholtysik, Bernd, Dr.**
  **81673 München (DE)**

(74) Vertreter: **Karg, Jochen**
**BASF Aktiengesellschaft,**
**Patentabteilung ZDX - C 6**
**67056 Ludwigshafen (DE)**

Bemerkungen:
Ein Antrag gemäss Regel 88 EPÜ auf Berichtigung der Beschreibung liegt vor. Über diesen Antrag wird im Laufe des Verfahrens vor der Prüfungsabteilung eine Entscheidung getroffen werden (Richtlinien für die Prüfung im EPA, A-V, 3.).

(54) **Optische Oberflächenprüfeinrichtung für linear bewegte, bandförmige Materialien**

(57) Die Erfindung betrifft eine mit Reflexion arbeitende Oberflächenprüfeinrichtung für linear bewegte, bandförmige Materialien, beispielsweise Papier oder Polymerfolien, geeignet zur automatischen Online—Registrierung von quer zur Bewegungsrichtung verlaufenden linienförmigen Unebenheiten. Die Prüfeinrichtung umfaßt eine geeignete Prüfstrecke, mindestens zwei optische Inspektionseinheiten und mindestens eine elektronische Schaltungsanordnung für den Nachweis sowohl der Einzelsignale der Inspektionseinheiten als auch der Koinzidenzsignale. Zur Erfindung gehört auch ein rollenförmig auf einen Wickelkern aufgewickelter magnetischer Informationsträger, der geprüft ist mit der Oberflächenprüfeinrichtung und der eine maschinell und/oder visuell lesbare Qualitätskennzeichnung trägt.

Fig. 1a

## Beschreibung

Die Erfindung betrifft eine mit Reflexion arbeitende Oberflächenprüfeinrichtung für linear bewegte, bandförmige Materialien, insbesondere für ein mit einer magnetischen Aufzeichnungsschicht beschichtetes Informationsträgerband.

Bei der Anwendung derartiger Materialien werden hohe Anforderungen an die Fehlerfreiheit des bandförmigen Materials gestellt. Insbesondere sind quer zur Längsrichtung des Bandes verlaufende, linienförmige Unebenheiten der Oberfläche unerwünscht. Diese entstehen vorzugsweise durch Faltenbildung bei ihrer Herstellung in einer Bahnbeschichtungsmaschine. Dabei wird ein bandförmiger Schichtträger von einer Wickelrolle abgewickelt, in seiner Längsrichtung mittels kraftschlüssig angetriebener Walzen durch die Maschine transportiert, beschichtet und schließlich unter Zugspannung auf eine zweite Wickelrolle aufgewickelt.

Es ist bekannt, daß beispielsweise durch kurzzeitige Veränderungen der Aufwickelgeschwindigkeit oder der Zugspannung Querfalten in der äußeren Wickellage entstehen können, die in die Wickelrolle beim weiteren Aufwickelvorgang eingewickelt werden. Durch Einwirkung der Zugspannung nachfolgender Wickellagen führt dies zu bleibenden, linienförmigen Verformungen der Bandoberfläche. Dies kann dazu führen, daß die betreffende Wickelrolle für die Anwendung unbrauchbar wird. Da mit den üblichen Aufwickeleinrichtungen derartige Faltenbildung nicht vollständig vermieden werden kann, besteht das Bedürfnis nach geeigneten Oberflächenprüfeinrichtungen, um die Falten, beziehungsweise die durch Faltenbildung verursachten, linienförmigen Verformungen des bandförmigen Materials, zu erkennen.

Eine entsprechende optische Prüfeinrichtung ist beispielsweise aus der US-Patentschrift 5 130 555 bekannt. Gemäß dieser technischen Lehre wird ein Muster aus geradlinigen, parallelen Streifen auf die Oberfläche eines kontinuierlich bewegten bandförmigen Materials projiziert und das von der Oberfläche reflektierte Linienmuster elektronisch ausgewertet. Eine Falte wird erkannt, wenn das reflektierte Muster hinsichtlich Geradlinigkeit vom Original abweicht. Mittels einer geeigneten Bandführungseinrichtung kann die Bandfalte anschließend ausgeregelt werden.

Diese technische Lehre ist jedoch sehr aufwendig, weil beispielsweise eine komplexe Prüfanlage mit Videokamera, Videoprozessor und nachfolgender elektronischer Datenverarbeitung erforderlich ist. Insbesondere gilt dieses, wenn mehrere Bandstreifen des bandförmigen Materials gleichzeitig geprüft werden sollen, zum Beispiel auf einer Längsschneidmaschine für magnetische Informationsträger. Außerdem besteht die Möglichkeit, daß sehr feine linienförmige Unebenheiten wegen der begrenzten optischen Auflösung des Abbildungssystems und der Digitalisierung des Reflexionsmusters nicht erkannt werden.

Auch die US 5 337 335 sowie die DE-C 31 12 438 sind nicht voll zufriedenstellend im Hinblick auf eine zuverlässige Registrierung von feinen, linienförmigen Unebenheiten der Bandoberfläche. Diese Dokumente erbringen lediglich den optischen Nachweis von größeren, lokalen Schichtdefekten auf einem beschichteten Band, beispielsweise mit Defektdurchmesser größer als 0,5 mm.

Es ist deshalb Aufgabe der vorliegenden Erfindung, eine verbesserte Oberflächenprüfeinrichtung bereitzustellen, die einfach und kostengünstig aufgebaut ist und mit einer hohen Nachweiswahrscheinlichkeit für feine linienförmige Unebenheiten der Bandoberfläche, die zur automatischen Online-Inspektion der Bandoberfläche geeignet ist. Die Einrichtung soll außerdem zur gleichzeitigen Prüfung von mehreren Bandstreifen gleichermaßen wie zur Inspektion eines einzelnen Bandstreifens geeignet sein.

Diese Aufgabe wird durch die Merkmale des Patentanspruchs 1 gelöst. Die Unteransprüche enthalten weitere vorteilhafte praktische Ausführungsformen der Erfindung. Erfindungsgemäß ist auch ein magnetischer Informationsträger, der mit der erfindungsgemäßen Prüfeinrichtung geprüft ist und eine entsprechende Kennzeichnung trägt. Ausführungsbeispiele der Erfindung sind in der nachfolgenden Beschreibung und den Zeichnungen enthalten.

In den Zeichnungen ist dargestellt in

Figur 1a      eine Prüfeinrichtung für ein einzelnes Band

Figur 1b      eine Prüfeinrichtung für zwei räumlich getrennte Bänder (2a, 2b)

Figur 2      die zu zwei Inspektionseinheiten (3, 3') gehörige elektronische Schaltungsanordnung.

Die Erfindung umfaßt eine geeignete Prüfstrecke (2) des kontinuierlich in der Längsrichtung bewegten bandförmigen Materials, die begrenzt wird durch mindestens zwei feststehende Bandführungsstäbe (1, 1'), mit mindestens zwei räumlich fest angebrachten Inspektionseinheiten (3, 3'), welche die gleiche Oberflächenseite des bandförmigen Materials berührungslos abtasten und mindestens eine elektronische Schaltungsanordnung zur Auswertung der Empfängersignale (5, 5'), und zwar sowohl als Einzelsignale zur Registrierung lokaler Defekte wie auch in Koinzidenz zur Registrierung von linienförmigen Unebenheiten (6) quer zur Bewegungsrichtung. Alle drei Komponenten wirken synergistisch zusammen, so daß letztlich eine erheblich gesteigerte Nachweisempfindlichkeit resultiert. Vorteilhaft ist der Einsatz eines Mikrocomputers, der die Fehlersignale erfaßt und die Ausgabe von Prüfdokumenten für jeden einzelnen geprüften Bandstreifen bewirkt.

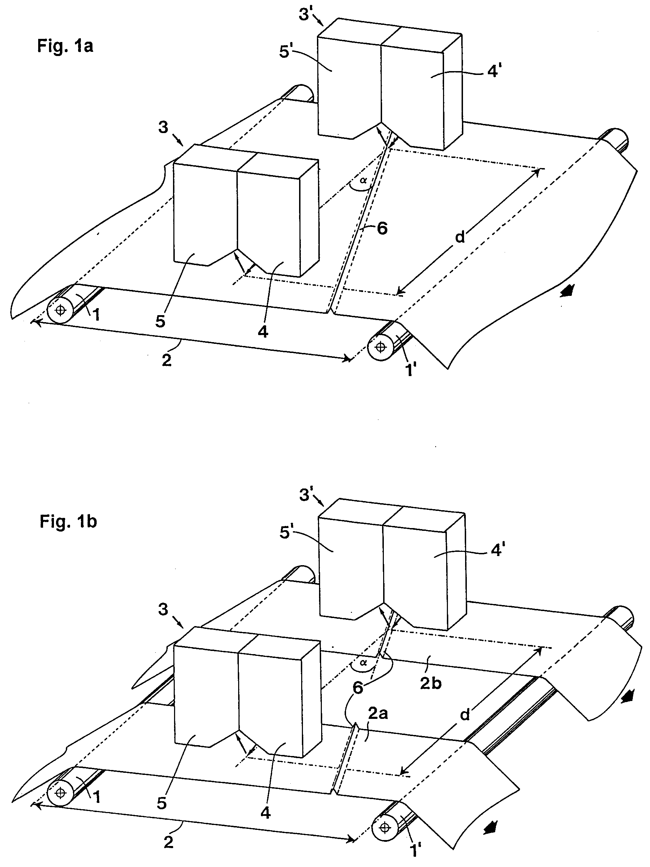

Im Rahmen der vorliegenden Erfindung kann die Prüfstrecke (2) entweder nur einen einzelnen Bahnstreifen umfassen (Figur 1a) oder auch mindestens zwei getrennte Bahnstreifen umfassen (Figur 1b). Im Falle der Figur 1b entstammen die Bahnstreifen (2a, 2b) derselben ursprünglichen Wickelrolle und sie entstehen daraus durch Längsschneiden auf einer an sich bekannten Schneidmaschine. Die Prüfstrecke (2) wird in Bewegungsrichtung begrenzt durch Bandführungsstäbe (1, 1').

Die Bandführungsstäbe (1, 1') bestehen aus zylinderförmigen Stäben mit kreisförmigem Querschnitt, welche an einem seitlich neben dem Band angeordneten steifen Rahmen starr befestigt sind, und über deren Manteloberflächen das bandförmige Material in Kontakt gleitet. In Vergleichsversuchen wurde nämlich festgestellt, daß auf diese Weise ein möglichst schwingungsstabiler Bandlauf längs der Prüfstrecke (2) gewährleistet ist. Alternative Ausführungsformen der Bandführung, zum Beispiel durch rotierende Rollen oder Luftlagerstäbe mit einer druckluftdurchlässigen Mantelfläche, die ein Luftpolster ausbilden, auf dem das bandförmige Material berührungslos gleitet, können demgegenüber Schwingungen des Bandstreifens längs der Prüfstrecke (2) senkrecht zur Bandoberfläche bewirken. Die Längsachsen der Stäbe sind untereinander parallel mit senkrechter Orientierung zur Bewegungsrichtung des Prüfmaterials.

Die genauen Abmessungen der Bandführungsstäbe (1, 1') sowie die Ausführung des Rahmens und die genaue Befestigung der Stäbe am Rahmen sind nicht wesentlich. Die Stablänge wird so gewählt, daß diese größer ist als die Breite des inspizierten Bandstreifens, damit die Stabenden beiderseits des Bandstreifens überstehen (Figur 1a, 1b). Der Abstand der Bandführungsstäbe voneinander sollte so gering wie möglich sein, damit äußere Einflüsse, zum Beispiel Luftströmungen, keine zusätzlichen Schwingungen des Bandes längs der Prüfstrecke (2) und senkrecht zur Oberfläche bewirken.

In einer vorteilhaften Ausführungsform der Erfindung bestehen die Bandführungsstäbe (1, 1') aus elektrisch leitendem, geerdetem Material, zum Beispiel aus einer metallischen Legierung, damit sich die Mantelfläche der Stäbe und die darübergleitende Bandoberfläche nicht elektrisch aufladen. Bekanntermaßen führt nämlich eine elektrische Oberflächenladung von bandförmigen Materialien unter anderem zu erhöhter Staubbelegung und damit zu unerwünschten punktförmigen Oberflächenprägungen in der aufgewickelten Materialrolle.

In einer weiteren vorteilhaften Ausführungsform besteht die Mantelfläche der Stäbe (1, 1') aus gehärtetem Stahl mit polierter Oberfläche, um Beschädigungen der darübergleitenden Bandoberfläche zu vermeiden.

In einer weiteren vorteilhaften Ausführungsform sollte der numerische Wert der Oberflächenrauhigkeit $R_z$ der Mantelfläche der Stäbe (1, 1') an jeder Stelle der Kontaktfläche kleiner sein als $R_z = 0,2\ \mu m$, um Beschädigungen der Bandoberfläche zu vermeiden.

Des weiteren ist es im Hinblick auf die vorliegende Erfindung und zur Vermeidung von Beschädigungen der Bandoberfläche vorteilhaft, wenn die Oberfläche des bandförmigen Materials mit einer reibungsvermindemden Überzugsschicht auf der über die Stäbe gleitenden Seite beschichtet ist, welche beispielsweise aus einem polymeren Lackfilm besteht, der feinverteilte anorganische Pigmente enthält. Dies ist insbesondere bei bandförmigen magnetischen Informationsträgern der Fall, die mit einer Aufzeichnungsschicht beschichtet sind, welche Magnetpigmente enthält. Derartiges bandförmiges Material, dessen Aufbau und Herstellung an sich bekannt und nicht zur Erfindung gehörig ist, wird vorteilhaft mit der entsprechenden Schichtoberfläche, die zudem auch sehr glatt ist und üblicherweise eine Oberflächenrauhigkeit $R_z$ kleiner als 0,2 $\mu m$ aufweist, im Kontakt über die feststehenden Bandführungsstäbe (1, 1') geführt. Bei entsprechender räumlicher Anordnung der Prüfeinrichtung kann gleichermaßen die der Beschichtung gegenüberliegende Oberfläche des bandförmigen Materials geprüft werden als auch die Beschichtungsoberfläche.

Des weiteren ist es vorteilhaft, wenn die Bandführung im Kontakt mit den Bandführungsstäben (1, 1') so gestaltet ist, daß die Mantelflächen der Stäbe (1, 1') von den Bandstreifen mindestens teilweise umschlungen werden. Dies dient der Stabilisierung des Bandlaufs längs der Prüfstrecke (2), insbesondere zur Vermeidung von Bandschwingungen senkrecht zur Bandoberfläche. Der jeweilige Umschlingungswinkel sollte bevorzugt größer sein als 10° und besonders bevorzugt zwischen 20° und 80° betragen.

Die Inspektionseinheiten (3, 3') umfassen optische Sendemittel (4, 4') und Empfangsmittel (5, 5'), die auf einer Seite des bandförmigen Materials angebracht sind und die die gleiche Bandoberfläche in Reflexion inspizieren. Sendemittel (4, 4') und Empfangsmittel (5, 5') können sowohl aus räumlich getrennten Einheiten bestehen als auch in jeweils einem geschlossenen Gehäuse enthalten sein. In der konkreten Ausführungsform der Erfindung war vorteilhafterweise letztere Anordnung gewählt, weil der kompakte Aufbau auch den Einsatz von mehreren, identischen Inspektionseinheiten beispielsweise an einer Aufwickeleinrichtung einer Längsschneidmaschine für Magnetbänder ermöglicht.

Erfindungsgemäß wirken Sende- und Empfangsmittel der Inspektionseinheiten (3, 3') auf räumlich getrennte Oberflächenbereiche, die nicht beide in der Bewegungsrichtung des bandförmigen Materials liegen. Vorteilhaft ist im Falle der Figur 1a, wenn die Verbindungslinie der Bereichsmittelpunkte der Einheiten (3, 3') auf der Bandoberfläche senkrecht zur Bewegungsrichtung liegt. Im Falle der Figur 1b mit zwei getrennten Bandstreifen (2a, 2b) gilt dieses sinngemäß für das ursprüngliche, noch nicht getrennte bandförmige Material. Somit können die eingangs beschriebenen linienförmigen Unebenheiten (6) der Bandoberfläche, die quer zur Bewegungsrichtung verlaufen, mit beiden Inspektionseinheiten (3, 3') in Koinzidenz detektiert werden.

Die Sendemittel (4, 4') können grundsätzlich aus jeder geeigneten Lichtquelle bestehen. Im konkreten Fall bestanden sie aus Infrarot-Leuchtdioden, die Licht mit einem Intensitätsmaximum von 875 nm emittieren. Die Empfangsmittel (5, 5') sind entsprechend ausgewählte Lichtdetektoren, zum Beispiel Fototransistoren. Eine geeignete Frontlinse kann die Strahlungsfokussierung des emittierten Lichtes auf die Bandoberfläche verbessern.

Die Befestigung der Inspektionseinheiten ist so zu wählen, daß mechanische Schwingungen der Anordnung vermieden werden.

In einer vorteilhaften Ausführungsform sind die Inspektionseinheiten (3, 3') räumlich so angeordnet, daß die optischen Achsen der Sende- (4, 4') und Empfangsmittel (5, 5') jeweils in der Reflexionsebene des Lichtes liegen und daß der Achsenschnittpunkt auf der zu prüfenden Oberfläche liegt. Auch ist es vorteilhaft, wenn der Winkel zwischen der optischen Achse jedes Empfangsmittels (5, 5') und der Oberflächennormalen gleich dem Reflexionswinkel des von den Sendemitteln (4, 4') emittierten Lichtes ist Damit resultiert bekanntermaßen eine hohe Nachweisempfindlichkeit für Oberflächenunebenheiten des bandförmigen Materials.

Entsprechend der räumlichen Intensitätsverteilung des von der Oberfläche zurückgestreuten Lichtes, der sogenannten Rückstreucharakteristik, kann es aber auch vorteilhaft sein, die Inspektionseinheiten so zu drehen, daß die optische Achse der Empfangsmittel (5, 5') nicht in Richtung des reflektierten Lichtes angeordnet ist. Die optimale Anordnung der Inspektionseinheiten (3, 3') wird in Abhängigkeit von der zu prüfenden Bandoberfläche in geeigneten Vorversuchen in der erfindungsgemäßen Oberflächenprüfanordnung ermittelt.

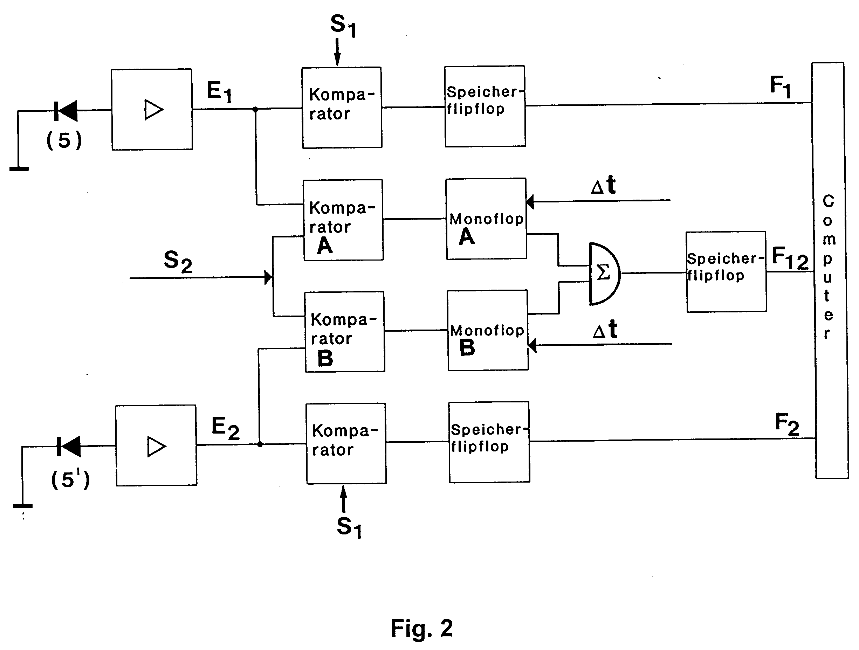

Die elektronische Schaltungsanordnung zur Erfassung der Signale der Empfangsmittel (5, 5') besteht gemäß Figur 2 aus zwei linearen Signalpfaden und einem gemeinsamen Koinzidenzpfad mit diskreten oder integrierten Verstärkern, Komparatoren und Flip-Flop-Elementen, die als Komponenten an sich bekannt sind (Figur 2). Die Komparatorschwellen ($S_1$, $S_2$) können im konkreten Fall manuell vorgewählt werden oder auch von einem Mikrocomputer gesetzt sein. Es ist ein besonderer Vorteil, daß die Schwelle $S_2$ des Koinzidenzkreises deutlich geringer gewählt werden kann als die Schwelle $S_1$, der linearen Signalpfade, weil nichtkoinzidente Einzelsignale ($E_1$, $E_2$) im Koinzidenzkreis nicht registriert werden und das Rauschniveau der Koinzidenz niedriger ist als das Rauschniveau der Einzelsignale. Im konkreten Fall war $S_1$ etwa 3 V und $S_2$ etwa 1,5 V.

Die Pulslänge $\Delta t$ der Digitalsignale der Monoflop-Bausteine bestimmt die Koinzidenzauflösungszeit und wird gleichfalls manuell oder vom Rechner gewählt. In geeigneten Vorversuchen kann der Wert von $\Delta t$ mit geeigneten Bandproben, die linienförmige Unebenheiten (6) quer zur Bewegungsrichtung des Bandes aufweisen, bestimmt werden als der minimale Wert, der für ein Koinzidenzereignis erforderlich ist. Es ist aber im Falle der Figur 1a und in der konkreten Ausführung auch möglich, $\Delta t$ aus der Formel

$$\Delta t = \frac{d}{v} \cdot \tan \alpha \qquad (I)$$

zu berechnen. Dabei ist v die Bandgeschwindigkeit, d ist der Abstand der Prüfbereiche der Inspektionseinheiten senkrecht zur Bewegungsrichtung und $\alpha$ ist der Azimutwinkel zwischen der Richtung der linienförmigen Unebenheit und der Senkrechten zur Bewegungsrichtung in der Prüfebene. Im konkreten Fall nach Figur 1a betrug die Bandgeschwindigkeit 8 m/s, der Abstand d war ungefähr 13 mm, der Winkel $\alpha$ betrug 80° und damit resultierte $\Delta t=9,2$ ms. Diese Formel ist im Falle der Figur 1b grundsätzlich auch anwendbar, jedoch muß dann gegebenenfalls ein Unterschied der Lauflänge der Bandstreifen (2a, 2b) bis zu den Prüfbereichen der Inspektionseinheiten (3, 3') mitberücksichtigt werden. Im konkreten Fall konnten linienförmige Unebenheiten im Azimut-Winkelbereich zwischen 0° und ca. 80° nachgewiesen werden.

Die Wirkungsweise der Schaltungsanordnung nach Figur 2 ist dem Fachmann bekannt. Im Zusammenhang mit der vorliegenden Erfindung soll im folgenden lediglich die Entstehung des Koinzidenz-Fehlersignals $F_{12}$ beschrieben werden:

Bewegt sich beispielsweise eine Falte (6) mit einem Azimutwinkel $\alpha$ durch die Prüfstrecke (2) und erreicht zunächst die Inspektionseinheit (3) und nach einer Zeitdauer $\Delta t$ die Inspektionseinheit (3'), so erscheint ein erstes, analoges Einzelsignal $E_1$ an einem Eingang von Komparator A und ein zweites, zeitlich verzögertes Signal $E_2$ an einem Eingang von Komparator B. Falls die Einzelsignale ($E_1$, $E_2$) die gewählte Koinzidenzschwelle $S_2$ überschreiten, Triggern die Komparatoren die Monoflop-Stufen Monoflop A und Monoflop B. Am Ausgang der Monoflops A und B erscheinen Rechteck—Signale mit der vorgewählten Pulsdauer, die mindestens so groß ist wie $\Delta t$. Falls der zeitliche Abstand der Monoflop-Pulse, der der zeitlichen Verzögerung der analogen Einzelsignale ($E_1$, $E_2$) entspricht, geringer ist als deren Pulsdauer, sind beide Eingänge des UND—‖ Gatters gleichzeitig gesetzt und das Speicher—Flipflop zählt einen Koinzidenz—Fehlerereignis $F_{12}$

Zur automatischen Fehlerregistrierung von linear bewegten, bandförmigen Materialien ist es vorteilhaft, die Inhalte der Speicher—Flipflops mit Hilfe eines Mikrocomputers zu überwachen. Dieser erfaßt für jeden einzelnen Bandstreifen die aufgetretenen linearen oder koinzidenten Fehlersignale und überträgt nach einer vorwählbaren Lauflänge die kumulierten Fehlerzahlen für jeden Bandstreifen an eine geeignete Ausgabeeinheit, beispielsweise einen Drucker, Bar—Code—Drukker und/oder einen Magnetstreifenschreiber. Anschließend werden die Flipflops auf Null zurückgesetzt und sind für den nächsten Fehlerzähllauf bereit.

Die erfindungsgemäße Schaltungsanordnung ist nicht nur auf die in Figur 2 gezeigte Ausführungsform beschränkt. Die Schaltung soll auch alternative Realisierungen umfassen, solange getrennte lineare Signalpfade und ein gemeinsamer Koinzidenzkreis für den Nachweis der Fehlersignale ($F_1$, $F_2$, $F_{12}$) von Paaren von Inspektionseinheiten (3, 3') ausgeführt sind. Beispielsweise können einzelne in der Figur 2 gezeigte Komponenten auf einem Halbleiterbaustein intergriert sein oder auch im Computer vollständig oder teilweise als numerisches Programm nachgebildet sein.

Falls mehr als zwei Inspektionseinheiten gleichzeitig eingesetzt werden, können entsprechend mehrere, identisch aufgebaute Schaltungsanordnungen zur Fehlersignalermittlung mit entsprechenden Koinzidenzpfaden verwendet werden.

Eine mit Reflexion arbeitende Oberflächenprüfeinrichtung für linear bewegte, bandförmige Materialien, beispielsweise Papier oder Polymerfolien, ist geeignet zur automatischen Online-Registrierung von quer zur Bewegungsrichtung verlaufenden linienförmigen Unebenheiten. Die Prüfeinrichtung umfaßt eine geeignete Prüfstrecke, mindestens zwei optische Inspektionseinheiten und mindestens eine elektronische Schaltungsanordnung für den Nachweis sowohl der Einzelsignale der Inspektionseinheiten als auch der Koinzidenzsignale. Zur Erfindung gehört auch ein rollenförmig auf einen Wickelkern aufgewickelter magnetischer Informationsträger, der geprüft ist mit der Oberflächenprüfeinrichtung und der eine maschinell und/oder visuell lesbare Qualitätskennzeichnung trägt.

**Patentansprüche**

1. Mit Reflexion arbeitende Oberflächenprüfeinrichtung für linear bewegte, bandförmige Materialien zur automatischen Online-Registrierung von quer zur Bewegungsrichtung verlaufenden linienförmigen Unebenheiten (6) auf dem Band, umfaßt:

    a) aus mindestens zwei feststehenden Stäben (1, 1') bestehende Bandführungsmittel zur Stabilisierung des Bandlaufs längs zumindest einer Prüfstrecke (2), wobei die Stabachsen senkrecht zur Bewegungsrichtung orientiert sind

    b) mindestens zwei optische Inspektionseinheiten (3, 3'), welche die gleiche Oberflächenseite des bandförmigen Materials abtasten und dabei räumlich getrennten Prüfbereichen der Prüfstrecke zugeordnet sind und die jeweils optische Sendemittel (4, 4') und Empfangsmittel (5, 5') enthalten und

    c) mindestens eine elektronische Schaltungsanordnung zur Registrierung von Fehlersignalen, wobei die analogen Einzelsignale $E_1$ und $E_2$ der Empfangsmittel (5, 5') mit einer ersten, einstellbaren Triggerschwelle $S_1$ verglichen

und daraus erste Fehlersignale $F_1$ und/oder $F_2$ registriert werden, wenn $E_1$ und/oder $E_2$ die Schwelle $S_1$ überschreitet, und wobei Paare von Einzelsignalen $E_1$, $E_2$ in einer Koinzidenzschaltung mit einem einstellbaren Zeitfenster $\Delta t$ auf Koinzidenz geprüft und wenn Koinzidenz vorliegt, zweite Fehlersignale $F_{12}$ registriert werden, wenn beide koinzidente Einzelsignale $E_1$ und $E_2$ eine zweite, einstellbare Triggerschwelle $S_2$ überschreitet, wobei $S_2$ kritischer ist als $S_1$.

2. Oberflächenprüfeinrichtung nach Anspruch 1, dadurch gekennzeichnet, daß jede Inspektionseinheit (3, 3') räumlich so angeordnet ist, daß die optische Achse jedes Empfangsmittels (5, 5') in der Reflexionsebene des Lichtes liegt, welche die optische Achse des Sendemittels (4, 4') enthält und senkrecht auf der geprüften Bandoberfläche steht.

3. Oberflächenprüfeinrichtung nach Anspruch 2, dadurch gekennzeichnet, daß der Winkel zwischen der optischen Achse jedes Empfangsmittels (5, 5') und der Richtung der Oberflächennormalen der Prüfstrecke (2) gleich ist dem entsprechenden Einfallswinkel zwischen der Richtung der Oberflächennormalen und der optischen Achse jedes Sendemittels (4, 4').

4. Oberflächenprüfeinrichtung nach Anspruch 1, dadurch gekennzeichnet, daß zur Prüfung Infrarotlicht mit einer Wellenlänge größer oder gleich 700 nm verwendet wird.

5. Oberflächenprüfeinrichtung nach Anspruch 4, dadurch gekennzeichnet, daß die optischen Sendemittel (4, 4') aus Infrarotdioden bestehen, welche infrarotes Licht mit einer Wellenlänge von ungefähr 875 nm emittieren und wobei die optischen Empfangsmittel (5, 5') aus Fototransistoren bestehen.

6. Oberflächenprüfeinrichtung nach Anspruch 1, dadurch gekennzeichnet, daß die feststehenden Stäbe (1, 1') der Bandführungsmittel zylinderförmig sind und wobei die Mantelfläche jedes zylinderförmigen Stabes dieselbe Oberflächenseite des bandförmigen Materials berührt.

7. Oberflächenprüfeinrichtung nach Anspruch 6, dadurch gekennzeichnet, daß die zylinderförmigen Stäbe aus elektrisch leitfähigem Material bestehen und geerdet sind.

8. Oberflächenprüfeinrichtung nach Anspruch 6, dadurch gekennzeichnet, daß die Mantelfläche jedes zylinderförmigen Stabes eine Oberflächenrauhigkeit Rz von weniger als 0,2 µm aufweist.

9. Oberflächenprüfeinrichtung nach Anspruch 6, dadurch gekennzeichnet, daß die zylinderförmigen Stäbe (1, 1') aus einer gehärteten metallischen Legierung, insbesondere aus gehärtetem Stahl, bestehen.

10. Oberflächenprüfeinrichtung nach Anspruch 6, wobei die jeden zylinderförmigen Stab berührende Oberflächenseite des bandförmigen Materials durch eine abriebbeständige Überzugsschicht eines bandförmigen Schichtträgers gebildet wird, und daß die Überzugsschicht aus einem polymeren Lackfilm besteht, welcher feinverteilte anorganische Pigmente enthält.

11. Mit Reflexion arbeitende Oberflächenprüfeinrichtung an einer Schneidmaschine für magnetische Informationsträger nach einem oder mehreren der Ansprüche 1 - 10, dadurch gekennzeichnet, daß das bandförmige Material längs der Prüfstrecke (2) aus mindestens zwei Bandstreifen (2a, 2b) besteht, die jeweils mit einer der beiden optischen Inspektionseinheiten (3, 3') abgetastet werden, und wobei die Fehlersignale ($F_1$, $F_{12}$) des ersten Bandstreifens (2a) und die Fehlersignale ($F_2$, $F_{12}$) des zweiten Bandstreifens (2b) sowie die Lauflänge der Bandstreifen (2a, 2b) automatisch registriert werden.

12. Rollenförmig auf einen Wickelkern aufgewickelter magnetischer Informationsträger, der auf seiner äußeren Wickelfläche eine maschinell und/oder visuell lesbare Qualitätskennzeichnung trägt, welche aus den automatisch registrierten Fehlersignalen nach Anspruch 11 abgeleitet ist.

Fig. 1a

Fig. 1b

Fig. 2

8

**Europäisches Patentamt**

# EUROPÄISCHER RECHERCHENBERICHT

Nummer der Anmeldung

EP 97 10 2841

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 5 283 623 A (MUHLBERG KARL-HEINZ ET AL) 1.Februar 1994<br>* Spalte 3, Zeile 45 - Zeile 55; Anspruch 1; Abbildungen 2,3 *<br>* Spalte 5, Zeile 25 - Zeile 65 *<br>* Spalte 8, Zeile 50 - Spalte 9, Zeile 35 * | 1-12 | G01N21/89 |
| A | US 3 972 624 A (KLEIN HANS JOACHIM ET AL) 3.August 1976<br>* Spalte 3, Zeile 45 - Zeile 68; Anspruch 1; Abbildungen 1,,4B *<br>* Spalte 12, Zeile 65 - Spalte 13, Zeile 5 * | 1-12 | |
| A | US 5 461 481 A (BOWEN HOWARD ET AL) 24.Oktober 1995<br>* Spalte 3, Zeile 40 - Spalte 5, Zeile 30; Anspruch 1; Abbildungen 1,2 * | 1-12 | |
| A | EP 0 306 742 A (MENSCHNER MASCHF JOHANNES) 15.März 1989<br>* Spalte 2, Zeile 15 - Spalte 3, Zeile 45; Anspruch 1; Abbildung 1 *<br>* Spalte 6, Zeile 5 - Zeile 25 * | 1-12 | **RECHERCHIERTE SACHGEBIETE (Int.Cl.6)**<br><br>G01N |
| A | US 4 595 840 A (PUUMALAINEN PERTTI) 17.Juni 1986<br>* Spalte 2, Zeile 10 - Zeile 45; Anspruch 1; Abbildungen 1,2 * | 1-12 | |
| A | GB 1 103 491 A (EASTMAN KODAK)<br>* Seite 2, Zeile 85 - Zeile 95; Anspruch 1; Abbildungen 1,2 *<br>* Seite 3, Zeile 15 - Seite 3, Zeile 70 * | 1-12 | |

-/--

Der vorliegende Recherchenbericht wurde für alle Patentansprüche erstellt

| Recherchenort | Abschlußdatum der Recherche | Prüfer |
|---|---|---|
| MÜNCHEN | 16.Mai 1997 | Mason, W |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)

Europäisches
Patentamt

**EUROPÄISCHER RECHERCHENBERICHT**

Nummer der Anmeldung

EP 97 10 2841

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | PATENT ABSTRACTS OF JAPAN vol. 018, no. 384 (P-1772), 19.Juli 1994 & JP 06 109656 A (NIPPON STEEL CORP), 22.April 1994, * Zusammenfassung * ----- | 1-12 | |
| | | | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| MÜNCHEN | 16.Mai 1997 | Mason, W |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)